# EUROPÄISCHE PATENTSCHRIFT

(11) **EP 0 785 027 B1**
(45) Veröffentlichungstag und Bekanntmachung des Hinweises auf die Patenterteilung: **02.11.2000**
(21) Anmeldenummer: 97250006.0
(22) Anmeldetag: 15.01.1997
(51) Int. Cl.: B03B 5/48

(54) **Schöpfrad**
Scoop wheel
Roue à godets

(30) Priorität: 17.01.1996 DE 19601481
(43) Veröffentlichungstag der Anmeldung: 23.07.1997
(73) Patentinhaber: Drechsle, Roland, F-68330 Huningue (FR)
(72) Erfinder: Drechsle, Roland, F-68330 Huningue (FR)
(74) Vertreter: Brümmerstedt, Hans Dietrich, Dipl.-Ing.

(56) Entgegenhaltungen:
- DE-C- 19 527 464
- US-A- 3 962 086
- PROSPEKT: "Wasch- und Entwässerungs- Schöpfräder " März 1995 , STICHWEH , DE XP002029821 * Seite 7 *

## Beschreibung

Die vorliegende Erfindung betrifft ein Schöpfrad mit einer Wanne zur Aufnahme eines Sand-Wasser-Gemisches, einem ersten und einem zweiten, koaxial und im Abstand voneinander in der Wanne angeordneten Radkörper, wobei der erste Radkörper im Bereich einer Stirnseite der Wanne angeordnet und an der gegenüberliegenden Stirnseite eine Überlaufrinne für Abwasser vorgesehen ist, mit einer jeweils zwischen der Überlaufrinne und dem zweiten Radkörper sowie zwischen den beiden Radkörpern angeordneten Förderschnecke zum Zubringen von abgesetztem Sand zum zweiten bzw. ersten Radkörper, mit einem dem ersten Radkörper zugeordneten Einlauf für das Sand-Wasser-Gemisch und mit je einem Auslauf für den von den beiden Radkörpern abgegebenen Sand.

Im Materialaufbereitungsprozeß in der Sand- und Kiesindustrie gehört bekanntlich das Waschen und Klassieren zu den wichtigsten Vorgängen. Verbunden mit dem Waschen ist gleichzeitig die erforderliche Trennung des Waschgutes von dem Waschwasser und den wasserlöslichen Verunreinigungen wie Lehm und Schlamm. Für das Waschen und Entwässern des Sandes sind die verschiedensten Maschinen bekannt. Zu diesen gehört auch das oben kurz beschriebene Schöpfrad.

Ein derartiges Schöpfrad ist z. B. im Prospekt "Stichweh Wasch- und Entwässerungsschöpfräder", FST 3/95, S. 7 beschrieben.

Sie kommen zum Einsatz, wenn keine großen Ansprüche an die Trennschärfe des produzierten Sandes gestellt werden. So können mit diesen Schöpfrädern lediglich Sande von 0 bis 4 mm oder 0 bis 2 mm (erster Radkörper) bzw. von 0 bis 1 mm (zweiter Radkörper) produziert werden.

Bei diesen bekannten Schöpfrädern, deren zwischen der überlaufrinne und dem zweiten Radkörper sowie zwischen den beiden Radkörpern vorgesehenen Förderschnecken den gleichen Außendurchmesser aufweisen, fließt dem ersten Radkörper das Sand-Wasser-Gemisch direkt zu, d.h., der grobe Sand und auch ein Teil des Feinsandes werden von den Bechern dieses Radkörpers direkt aufgenommen und ausgetragen. Auch ein Teil des Feinsandes, der sich im Bereich der ersten Schneckengänge absetzt, wird dem ersten Radkörper zugeführt und von diesem aufgenommen. Der größte Teil des feinen Sandes wird durch den zweiten Radkörper direkt aufgenommen und ausgetragen. Der sehr feine Sand, welcher sich zwischen dem zweiten Radkörper und der Überlaufrinne absetzt, wird durch die verhältnismäßig lange Förderschnecke ebenfalls dem zweiten Radkörper zugeführt. Am Ende der Wanne fließt dann das Wasser über die überlaufrinne ab.

Der Trennschnitt zwischen Grob- und Feinsand läßt sich durch unterschiedliche Wasserzugabe regeln. Soll aber dem Grobsand mehr Korn von 0,25 bis 0,5 mm entzogen werden, so ist dies nicht möglich. Durch mehr Wasserzugabe erhöht sich nämlich die Strömungsgeschwindigkeit vom Einlauf in Richtung Überlaufrinne, so daß dem Grobsand nicht nur Korn von 0,25 bis 0,5 mm, sondern auch Korn von 0 bis 0,25 mm entzogen wird. Der Grobsand 0 bis 4 mm oder 0 bis 2 mm soll einen nach DIN 4226 festgelegten Anteil 0,063 bis 0,125 mm und 0,125 bis 0,25 mm enthalten. Kontrollierte Sandsorten mit einem kleinen Streubereich der Siebkurve von 0,063 mm bis 0,25 mm können daher nicht produziert werden.

Schwankt der Sandanteil im Rohkies, so ist der Streubereich der Grobsandsiebkurve 0 bis 4 mm oder 0 bis 2 mm im Bereich 0 bis 0,5 mm sehr groß.

Ein weiterer Nachteil dieser Schöpfräder ist darin zu sehen, daß deren Waschleistung unbefriedigend ist.

Aufgabe der vorliegenden Erfindung ist es daher, ein Schöpfrad der eingangs beschriebenen Art zur Verfügung zu stellen, bei dem die Produktion kontrollierter Sande möglich ist und das zudem eine verbesserte Waschleistung aufweist.

Erfindungsgemäß wird diese Aufgabe mittels eines gattungsgemäßen Schöpfrades mit den aus dem Kennzeichen des ersten Anspruchs hervorgehenden Merkmalen gelöst.

Damit wird erstmals ein Schöpfrad zur Verfügung gestellt, mit dem neben den üblichen Funktionen - Waschen und Entwässern - gleichzeitig auch klassiert werden kann, also ein Wasch-, Entwässerungs- und Klassierschöpfrad.

Aufgrund des kleineren Durchmessers der Förderschnecke zwischen den beiden Radkörpern liegt am ersten Radkörper eine tiefere Waschzone als am zweiten Radkörper vor. Dadurch, sowie durch die vorgesehene Vorwaschkammer und die Nachwaschkammer, ist am ersten Radkörper eine Intensivwaschzone ausgebildet.

Das Sand-Wasser-Gemisch wird erfindungsgemäß zumindest teilweise in die Vorwaschkammer eingeleitet, also nicht mehr - wie bisher üblich - ausschließlich dem ersten Radkörper zugeführt. Durch eine entsprechende Aufteilung des Volumenstroms kann im Bedarfsfall erreicht werden, daß ein möglichst großer Anteil des Sand-Wasser-Gemischs die Intensivwaschzone auf einem möglichst langen Weg durchlaufen muß. Der die Vorwaschkammer und die Nachwaschkammer trennende Radkörper wirkt nämlich für das Sand-Wasser-Gemisch wie eine Staumauer, die von diesem umflossen werden muß.

Die Nachwaschkammer wird durch den ersten Radkörper und die Stirnwand des Klassiertanks gebildet. Die zwischen beiden Radkörpern angeordnete Zubringerschnecke drückt den Sand nicht wie bei den herkömmlichen Schöpfrädern gegen den ersten Radkörper, bevor er mit den Bechern aufgenommen werden kann, sondern schiebt den Sand über die Stirnwand des Klassiertanks. Der Sand fällt frei über die Stirnwand in die tiefer liegende Nachwaschkammer. Das Wasser-Feinsand-Gemisch kann die Nachwaschkammer nur über diese Stirnwand des Klassiertanks verlassen. Es entsteht ein natürlicher Aufstrom. In diesen Aufstrom fällt der von der Zubringerschnecke geförderte Sand in die Nachwaschkammer und wird nochmals gewaschen, bevor er von den Bechern aufgenommen werden kann. So gelangt der Sand nicht auf kürzestem Wege in die Becher des ersten Radkörpers.

Der gegenüber herkömmlichen Schöpfrädern kleiner ausgebildete Außendurchmesser der zum ersten Radkörper fördernden Zubringerschnecke ermöglicht die Ausbildung des oben schon angesprochenen Klassiertanks am Wannenboden. Die Stirnwand des Klassiertanks ergibt eine Abtrennung im unteren Teil der Schöpfradwanne, so daß ein Klassierbereich zwischen der Nachwaschkammer und dem zweiten Radkörper gebildet wird. In diesem Bereich sind zu diesem Radkörper hin einzeln ausspülbare Sandabsetzkammern angeordnet. Werden diese Kammern nicht ausgespült, weil der Feinsand im Fertigprodukt des ersten Radkörpers benötigt wird, so fördert die Zubringerschnecke zwischen den beiden Radkörpern den über dem Klassiertank abgesetzten Feinsand zum ersten Radkörper.

Der Wascheffekt in der Schöpfradwanne kann in drei Bereiche unterteilt werden, eine Grobkornbehandlung in der Vorwaschkammer, eine Feinkornbehandlung zwischen den beiden Radkörpern sowie eine Feinstkornbehandlung zwischen dem zweiten Radkörper und der Überströmrinne.

Zwischen den beiden Radkörpern ist an der dem Einlauf gegenüberliegenden Wannenwandung ein Ansaugkanal angeordnet, dessen Aufbau und Funktion aus EP 0 593 144 A3 bekannt ist. Das über diesen Kanal abgesaugte Recyclingwasser kann für den Wascheffekt in der Vorwaschkammer oder im Vorwaschkanal der Kieswaschanlage genutzt werden.

In vorteilhafter Ausgestaltung der Erfindung ist an der dem Einlauf des Sand-Wasser-Gemisches gegenüberliegenden Wannenwandung zwischen dem zweiten Radkörper und der Überlaufrinne mindestens ein zweiter Ansaugkanal für Recyclingwasser angeordnet, für dessen Aufbau und Funktion das oben Gesagte gilt. Das aus dem diesem Ansaugkanal zugeordneten Wasser-Sammelreservoir abgepumpte Recyclingwasser kann bei Bedarf über Rohrleitungen in die einzelnen Sandabsetzkammern des Klassiertankes geleitet werden, wodurch diese einzeln ausspülbar sind. Durch diesen Spülkreislauf erhöht sich die Strömungsgeschwindigkeit in Richtung Überlaufrinne nicht.

Vorteilhafte Weiterbildungen der Erfindung ergeben sich aus den Gegenständen der weiteren abhängigen Ansprüche.

Die Erfindung wird nachstehend anhand von Ausführungsbeispielen näher erläutert. In der dazugehörigen Zeichnung zeigt:
- Fig. 1a: einen schematischen Längsschnitt durch ein Schöpfrad,
- Fig. 1b: eine Draufsicht auf dieses Schöpfrad,
- Fig. 1c: eine Seitenansicht dieses Schöpfrades,
- Fig. 2: einen Schnitt A - B gemäß Fig. 1b,
- Fig. 3: einen Schnitt C - D gemäß Fig. 1b,
- Fig. 4: eine schematische Draufsicht auf ein Schöpfrad zur Verdeutlichung der Ausbildung des Wannenbereichs zwischen den beiden Radkörpern,
- Fig. 5: einen Schnitt E - F gemäß Fig. 4,
- Fig. 6a, b, c: einige Ausführungsbeispiele für in den Wassersammelreservoirs der Ansaugkanäle angeordnete Lamellenpakete,
- Fig. 7: eine schematische Darstellung von Trennschnitten an den Lamellenpaketen,
- Fig. 8.1: eine Seitenansicht eines Schöpfrades mit einem Verteilerzulauf,
- Fig. 8.2: eine Draufsicht auf das Schöpfrad gemäß Fig. 8.1,
- Fig. 9.1: ein weiteres Ausführungsbeispiel für ein Schöpfrad mit einem Verteilerzulauf in Seitenansicht, und
- Fig. 9.2: eine Draufsicht auf das Schöpfrad gemäß Fig. 9.1.

Das in der Zeichnung dargestellte Schöpfrad besitzt eine Wanne 1, der das zu trennende Sand-Wasser-Gemisch über einen Einlauf 11 zuläuft. Im Bereich dieses Einlaufes 11 ist ein Radkörper 2 angeordnet, der Schöpfbecher 42 für die Aufnahme des geschöpften Sandes aufweist. Aus diesen Schöpfbechern 42 wird der Sand in den Auslauf 58 entleert. Die Schöpfbecher 42 können mit Seiteneinführungsmessern ausgerüstet sein, die den Wascheffekt verbessern, eine optimale Becherfüllung ermöglichen und die seitliche Reibung der Becher verringern.

Der Radkörper 2 ist von der benachbarten Stirnwand 6 der Wanne 1 soweit beabstandet, daß zwischen diesen eine Vorwaschkammer 7 ausgebildet ist. Auf der anderen Seite des Radkörpers 2 ist eine Nachwaschkammer 10 vorgesehen. Diese wird durch eine im Abstand vom Radkörper 2 lotrecht vom Wannenboden 8 aufragende Trennwand 9 begrenzt, welche sich zwischen den beiden Seitenwänden der Wanne 1 erstreckt.

Der Vorwaschzone 7 wird das Sand-Wasser-Gemisch über eine tiefer liegende und eine höher liegende Einlauföffnung 40 bzw. 39 zugeleitet, wobei über die tiefer liegende Einlauföffnung 40 mehr Grobsand und über die höher liegende Einlauföffnung 39 mehr Feinsand eingespült wird. Diese Aufteilung sorgt dafür, daß die gröbere Körnung einen geringen Sinkweg und die feinere Körnung einen kurzen Steigweg hat.

Auf der anderen Seite des Radkörpers 2 ist ebenfalls eine Einlauföffnung 43 vorgesehen, die tief liegt und dadurch direkt in die Nachwaschkammer 10 einmündet. Diese Einlauföffnung 43 hat eine drei- bis viermal kleinere Querschnittsfläche als die beiden Einlauföffnungen 39, 40 der Vorwaschkammer 7.

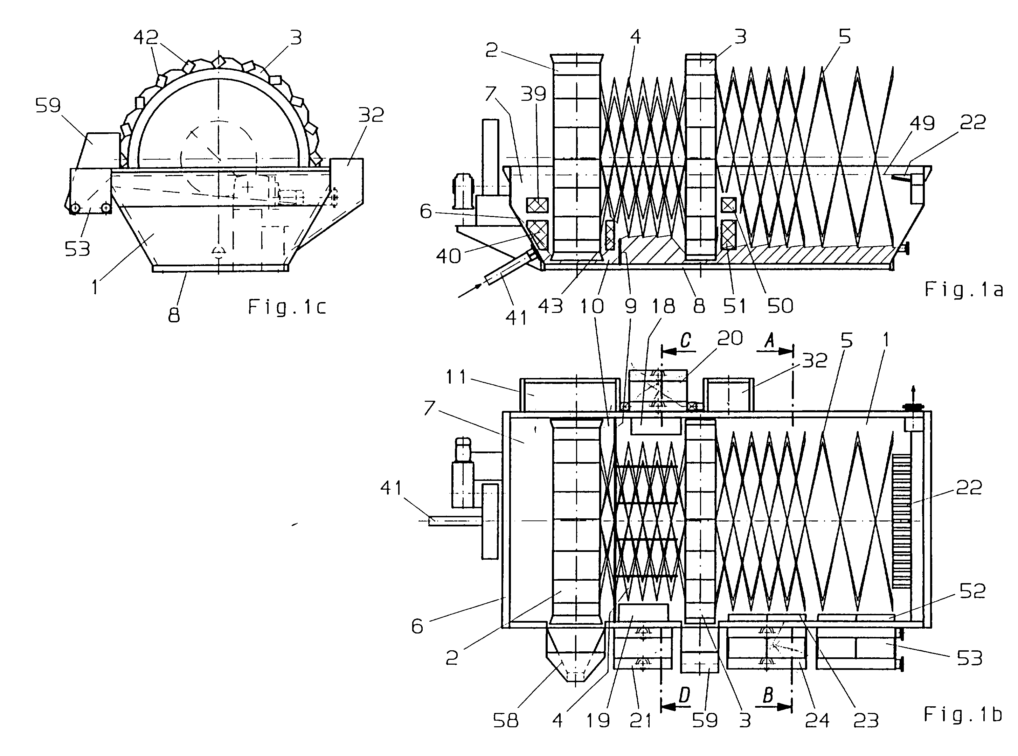

Im Abstand vom ersten Radkörper 2 ist ein zweiter Radkörper 3 angeordnet, der den geschöpften Sand in einen Auslauf 59 abgibt. Zwischen den beiden Radkörpern 2, 3 ist eine Förderschnecke 4 vorgesehen. Wie am besten aus Fig. 1a bzw. Fig. 1b zu erkennen ist, ist der Außendurchmesser dieser Förderschnecke 4 wesentlich geringer als der der zwischen dem Radkörper 3 und der Überlaufrinne 22 vorgesehenen Förderschnecke 5. Dadurch ergibt sich am Radkörper 2 eine tiefere Waschzone als am Radkörper 3. Die För-derschnecke 4 ist viergängig und mit einer sehr großen Schneckenblechbreite B ausgeführt. Diese Ausbildung trägt zur Beruhigung der Strömung zwischen den beiden Radkörpern 2, 3 bei.

Bei einem Außendurchmesser der Radkörper 2, 3 von beispielsweise jeweils 5000 mm können die Förderschnecken 4, 5 folgende Abmessungen haben:
- Förderschnecke 4: Außendurchmesser - 3900 mm
Innendurchmesser - 3000 mm
also B - 450 mm
- Förderschnecke 5: Außendurchmesser - 4400 mm
Innendurchmesser - 3900 mm

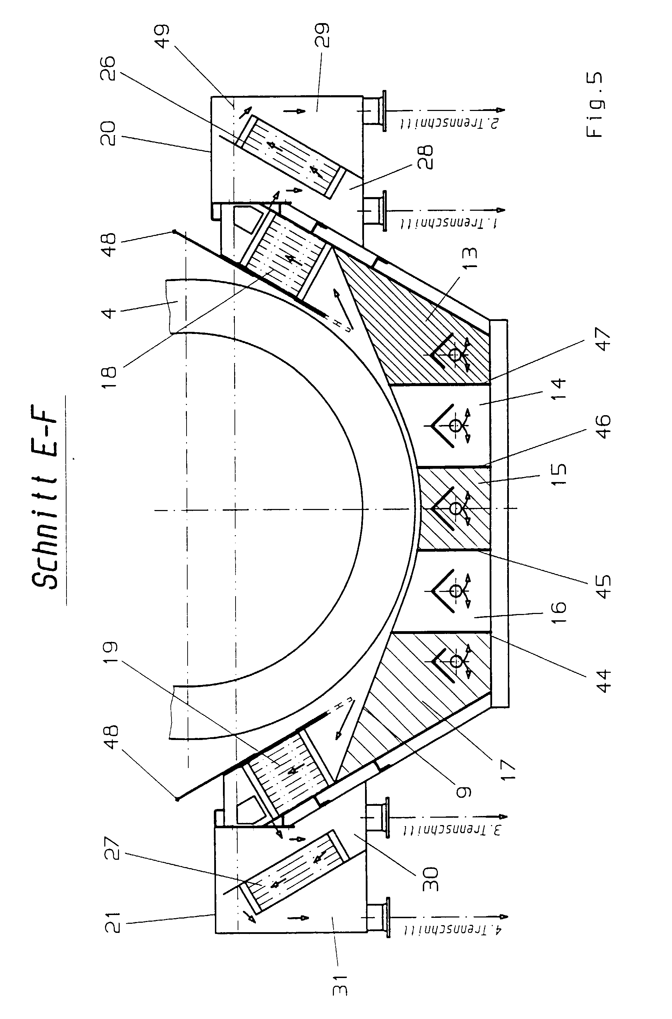

Bei diesen Abmessungen beträgt die Tiefe der Nachwaschkammer 10 in der Mitte des Schöpfrades 550 mm. Zu den Seitenwänden der Wanne 1 hin vergrößert sich die Tiefe, da die Trennwand 9 - wie am besten aus Fig. 5 zu erkennen ist - in Anpassung an den Radius der Förderschnecke 4 von der Mitte nach außen hin höher wird.

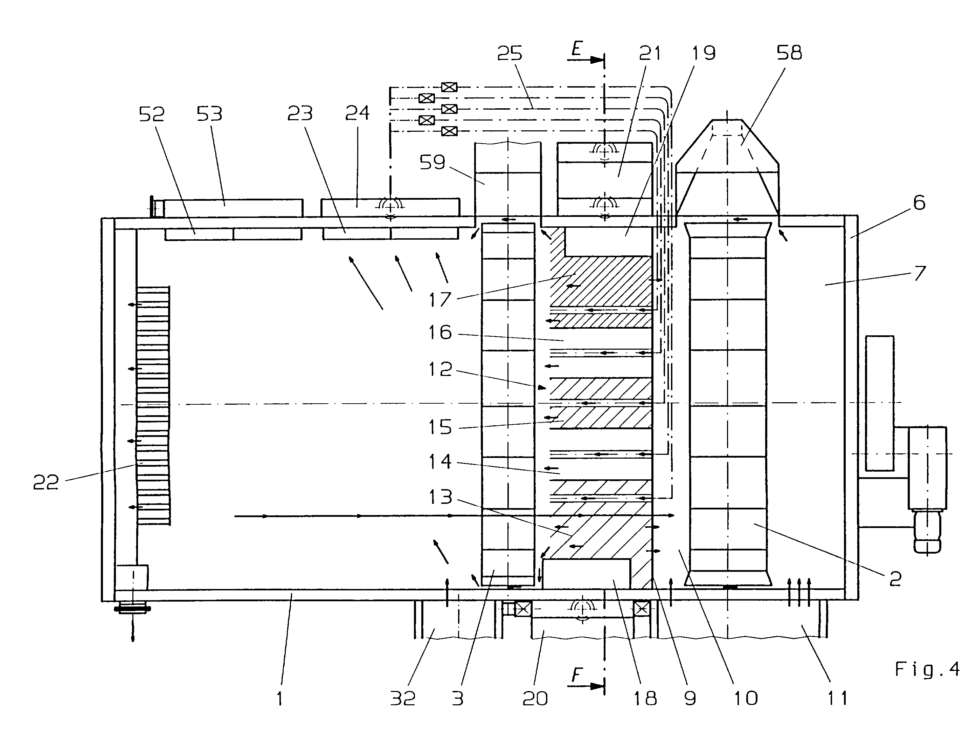

Der kleinere Außendurchmesser der Förderschnecke 4 ermöglicht es, daß in der Wanne 1 ein Klassiertank 12 ausgebildet werden kann, der durch die Trennwand 9 von der Nachwaschkammer 10 abgegrenzt ist. Von der Trennwand 9 erstrecken sich in Richtung der Längsachse des Schöpfrades vier weitere Trennwände 44, 45, 46 und 47, die den Klassiertank 12 in fünf, zum Radkörper 3 und nach oben hin offene Sandabsetzkammern 13, 14, 15, 16 und 17 unterteilen. Diese Ausbildung des Klassiertanks 12 geht am deutlichsten aus den Figuren 4 und 5 hervor.

Zwischen den beiden Radkörpern 2, 3 sind an der Wannenwandung Ansaugkanäle 18, 19 angeordnet, deren Strömungsquerschnitt zur Erhöhung der Abscheidewirkung mit Lamellen bestückt ist. Diese Ansaugkanäle 18, 19 sind also als Lamellenpakete ausgebildet. Jeder Ansaugkanal 18, 19 besitzt ein verschiebbares Ansaugsteuer-Kantenblech 48, mit dem die Ansaugtiefe an jedem Ansaugkanal 18, 19 variiert werden kann. Die Ansaugkanäle 18, 19 münden über eine öffnung in der Wannenwandung in außen an die Wanne 1 angeschraubte Sammelrinnen 20, 21, in denen sich der gleiche Flüssigkeitsstand 49 wie in der Wanne 1 einstellt. Wird Recyclingwasser aus den Sammelrinnen 20, 21 abgepumpt, strömt aufgrund der Lageenergie Wasser aus der Wanne 1 nach. Eine weitergehende Erörterung von Aufbau und Funktion der Ansaugkanäle 18, 19 sowie der zugeordneten Sammelrinnen 20, 21 erübrigt sich an dieser Stelle, da diese Zusammenhänge, wie eingangs schon dargelegt, aus EP 0 593 144 A3 bekannt sind.

Im Unterschied zu dem aus EP 0 593 144 A3 bezüglich der Recyclingwasser-Ansaugkanäle bekannten Stand der Technik, können, müssen aber nicht, bei der vorliegenden Erfindung weitere Lamellenpakete innerhalb der Sammelrinnen 20, 21 vorgesehen sein. Im Ausführungsbeispiel ist jeweils ein weiteres Lamellenpaket 26 bzw. 27 vorgesehen. Diese Lamellenpakete 26, 27 unterteilen die Sammelrinnen 20, 21 jeweils in zwei separate Kammern 28, 29 bzw. 30, 31, wodurch ein weiterer Trennschnitt möglich ist.

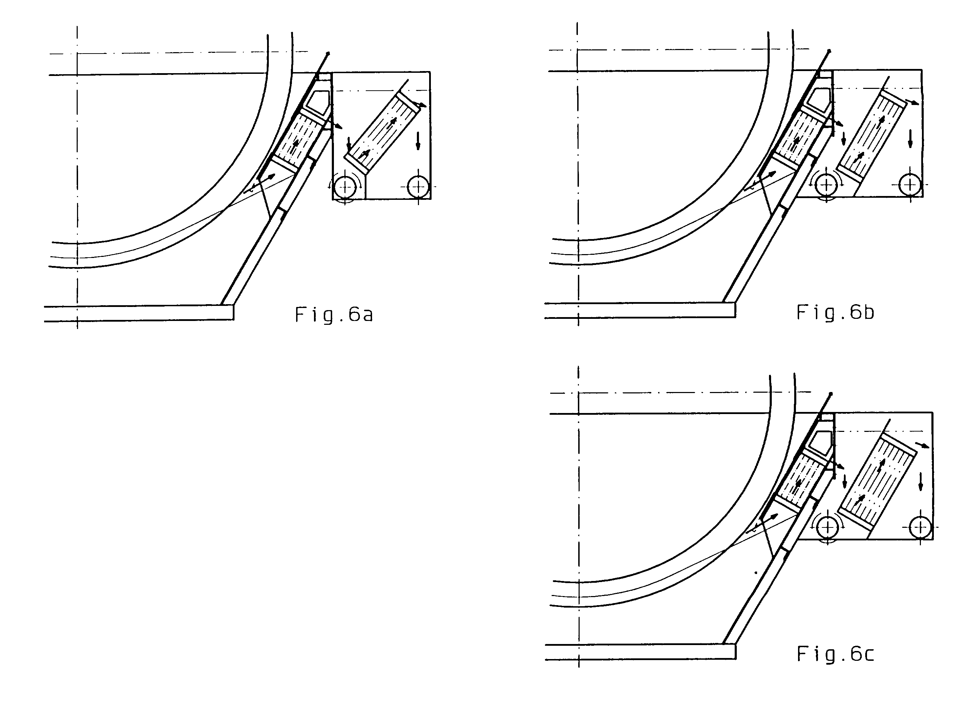

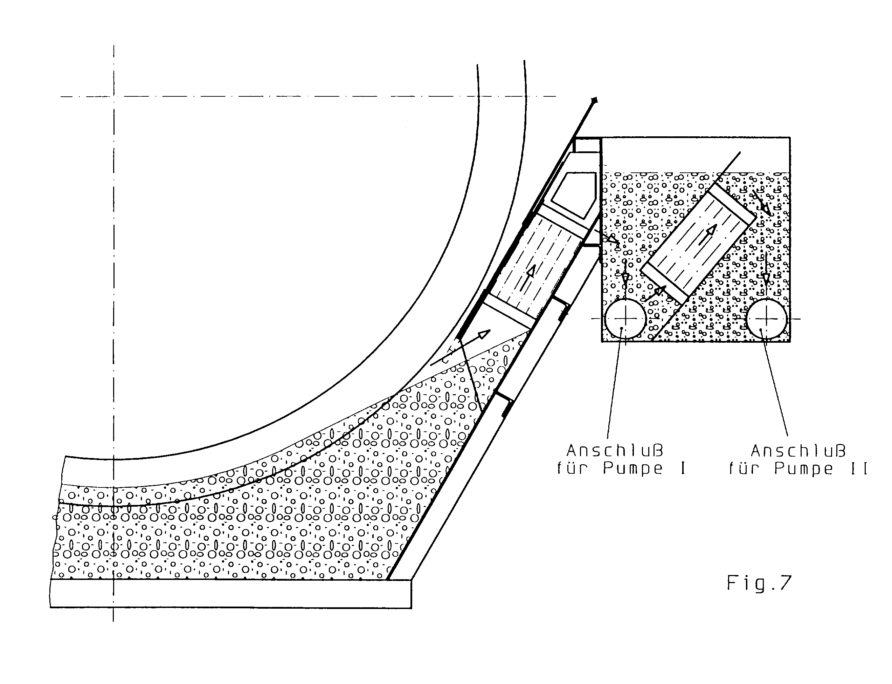

In den Figuren 6a bis 6c ist dargestellt, daß durch unterschiedliche Neigungen sowie Querschnitte des bzw. der Lamellenpakete in den Sammelrinnen die Abscheideraten beeinflußt werden können. Fig. 7 zeigt in symbolischer Weise anhand dargestellter Partikelgrößen die Trennschnitte an den Lamellenpaketen.

Ein weiterer Unterschied zu den bekannten gattungsgemäßen Schöpfrädern besteht in dem dem zweiten Radkörper 3 zugeordneten Einlauf 32. Dieser Einlauf 32 mündet tiefliegend in die Wanne 1 ein. Wie in der Vorwaschkammer 7 ist auch hier eine obere Einlauföffnung 50 für feineres Korn und eine untere Einlauföffnung 51 für gröberes Korn vorgesehen. Die Ausnützung dieses gegenüber dem Stand der Technik zusätzlichen Einlaufs 32 wird weiter unten noch erläutert.

Zwischen dem Radkörper 3 und der Überlaufrinne 22 sind an der dem Einlauf 32 gegenüberliegenden Wannenwandung zwei weitere Ansaugkanäle 23, 52 mit zugeordneten Sammelrinnen 24, 53 angeordnet.

Aus der Sammelrinne 24 des Ansaugkanals 23 führen, wie in Fig. 4 schematisch dargestellt, durch Schieber absperrbare Rohrleitungen 25 in die Sandabsetzkammern 13 bis 17 des Klassiertanks 12, so daß diese einzeln ausspülbar sind, wenn mittels einer Pumpe Recyclingwasser durch die Rohrleitungen 25 gedrückt wird.

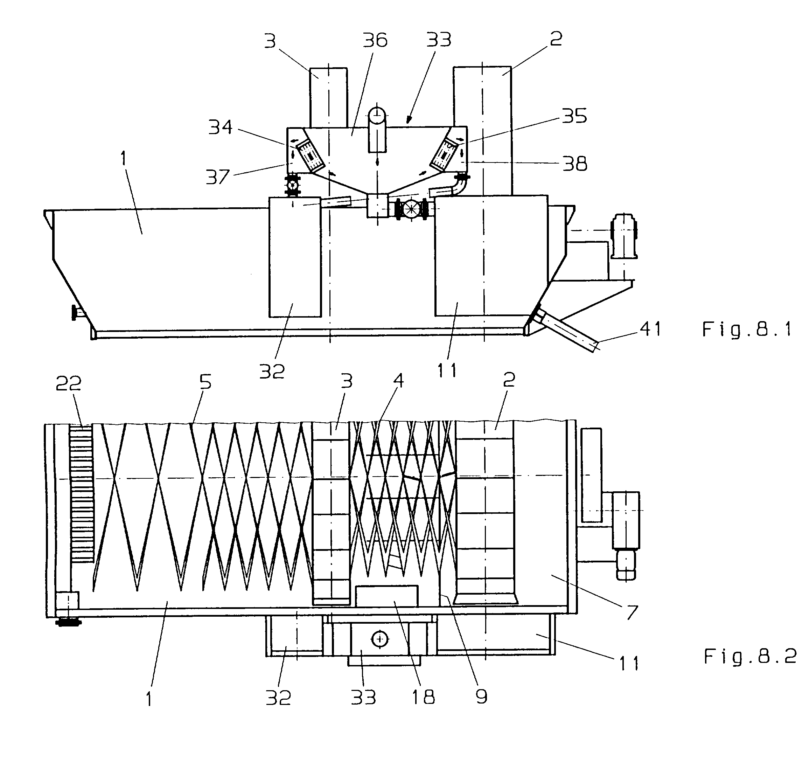

Den beiden Einläufen 11, 32 des Schöpfrades kann ein Vortrennsystem vorgeschaltet werden. Dieses weist einen geodätisch höher als die Einläufe 11, 32 liegenden Verteilereinlauf 33 auf, wie in den Figuren 8.1 und 8.2 dargestellt. In diesen Verteilereinlauf 33 sind in analoger Weise zu den Sammelrinnen der Ansaugkanäle Lamellenpakete 34, 35 angeordnet, die den Verteilereinlauf 33 in separate Kammern 36, 37 und 38 unterteilen. Aus diesen Kammern sind die Trennschnitte den Einläufen 11, 32 wahlweise zuführbar.

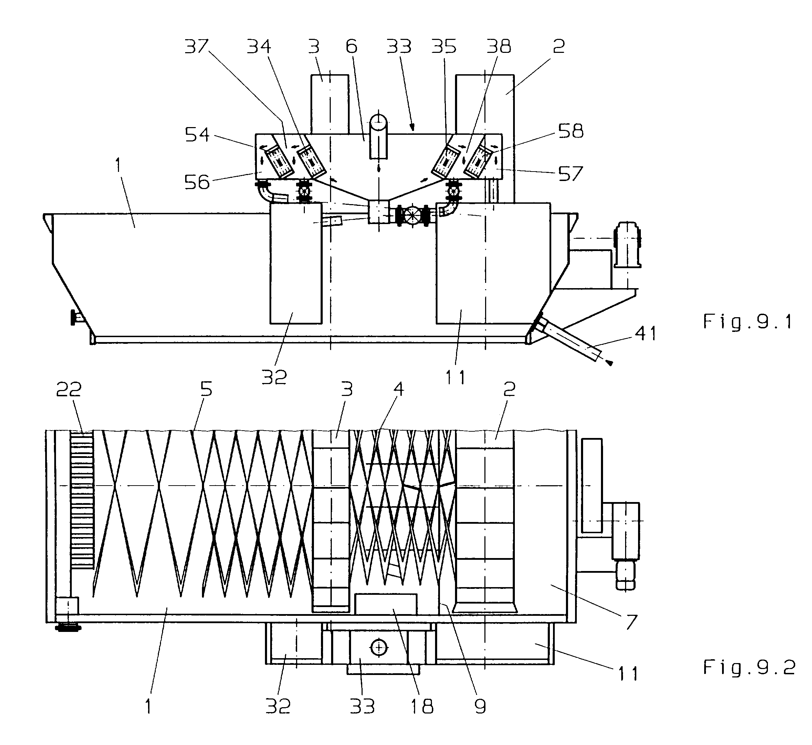

Im Ausführungsbeispiel gemäß den Figuren 9.1 und 9.2 sind im Unterschied zu dem vorhergehenden Beispiel zusätzliche Lamellenpakete 54, 55 im Verteilereinlauf 33 angeordnet, welche weitere Trennschnitte in den Kammern 56, 57 ermöglichen.

Das oben beschriebene Vortrennsystem gestattet es, den Einläufen 11, 32 in variabler Weise unterschiedliche Kornfraktionen zuzuführen.

Mit dem erfindungsgemäßen Schöpfrad sind zahlreiche Wasch- und Klassierkreisläufe fahrbar.

So ist ein Feinsandentzug von 0 bis 0,5 mm aus dem Fertigprodukt des ersten Radkörpers 2 möglich. Dazu werden die zwischen den beiden Radkörpern 2, 3 angeordneten Lamellenpakete herangezogen, mit denen Feintrennschnitte ausgeführt werden. Mit einer oder mehreren Pumpen, die automatisch nach der Gesamtfeststoffmenge, welche mit dem Sand-Wasser-Gemisch in den Einlauf 11 eingeleitet wird, drehzahlgeregelt werden, können wahlweise erste, zweite, dritte oder vierte Trennschnitte (siehe Fig. 5) in den Einlauf 32 gepumpt werden. So kann aus dem Bereich des Radkörpers 2 gezielt Korn von 0 bis 0,063 mm oder von 0,063 bis 0,125 mm oder von 0,125 bis 0,25 mm oder von 0,25 bis 0,5 mm entzogen werden.

Andererseits können diese Fraktionen anstelle in den Einlauf 32 in den Einlauf 11 gepumpt werden, um das Fertigprodukt des Radkörpers 2 gezielt mit diesen Körnungen anzureichern.

Es ist auch möglich, Grobsand von 0 bis 1 mm aus dem Bereich des Radkörpers 2 zu entziehen. Das kann über die ausspülbaren Sandabsetzkammern 13 bis 17 erfolgen, wobei die beiden Sandabsetzkammern 13 und 17 die wichtigsten Funktionen übernehmen. Diese beiden Sandabsetzkammern 13, 17 haben die größte Entfernung voneinander und die größten Kornunterschiede. Außerdem fällt in die Sandabsetzkammer 13 der Trennschnitt des darüberliegenden Ansaugkanals 18 und in die Sandabsetzkammer 17 der Trennschnitt des über diese angeordneten Ansaugkanals 19.

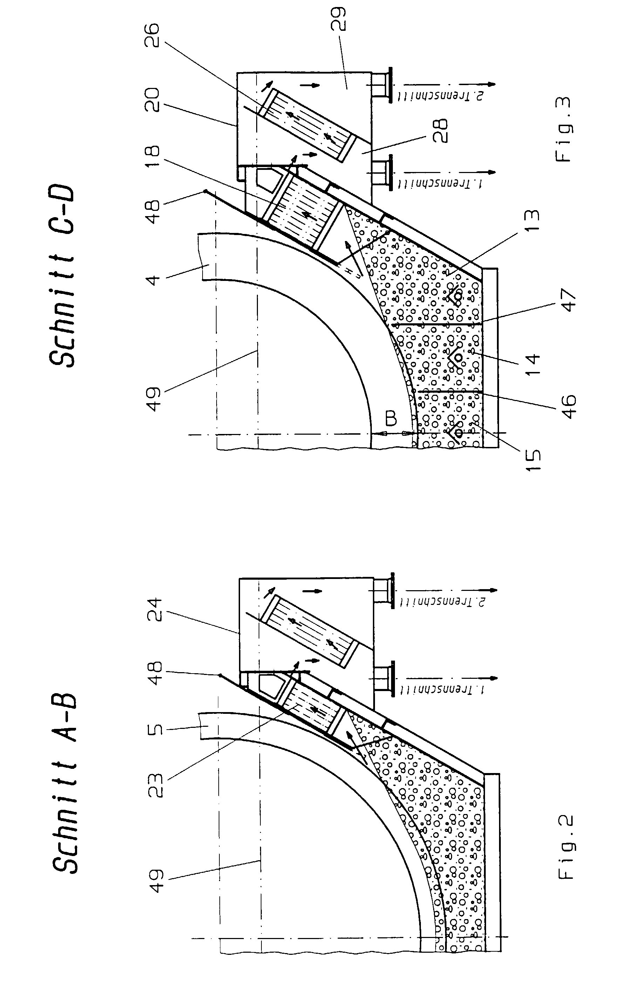

Ein Waschkreislauf kann mit dem zweiten Trennschnitt (siehe Fig. 3) aus der Sammelrinne 20 gefahren werden. Dazu wird das Recyclingwasser mit einer Pumpe, die nach dem Verschmutzungsgrad des Sandes und der Gesamtfeststoffmenge automatisch drehzahlgeregelt wird, von unten unter ca. 30° Neigung in die Mitte der Vorwaschkammer 7 gepumpt. Hierzu ist in die Vorwaschkammer 7 ein Recyclingwasser-Aufstromrohr 41 eingebunden.

Ein weiterer Kreislauf kann mit dem Trennschnitt aus Kammer 31 der Sammelrinne 21 (vierter Trennschnitt, Fig. 5) gefahren werden. Dieser Waschkreislauf führt mit einer Pumpe, die nach der Gesamtfeststoffmenge automatisch drehzahlgeregelt wird, in den Vorwaschkanal einer nicht dargestellten Kiesaufbereitungsanlage. Von dort führt ein Kreislauf mit dem Sand-Wasser-Gemisch zurück in den Einlauf 11.

Die beiden oben beschriebenen Waschkreisläufe erhöhen die Strömungsgeschwindigkeit in Richtung des zweiten Radkörpers 3 nicht und haben damit keinen Einfluß auf die zum Radkörper 3 gespülte Feinsandmenge. Einzig und allein die Frischwassermenge, die zusammen mit dem Sand-Wasser-Gemisch in den Einlauf 11 läuft, beeinflußt die Strömungsgeschwindigkeit zum Radkörper 3. Bleibt die Frischwassermenge konstant, so ist auch diese Geschwindigkeit konstant. Eine konstante Frischwassermenge hat somit keinen Einfluß auf die Klassierung und kann als konstante Größe in die weiter unten noch angesprochenen computergesteuerten Klassierprogramme aufgenommen werden.

Ein weiterer Kreislauf kann mit dem aus der Sammelrinne 53 des am nächsten an der Überströmrinne 22 angeordneten Ansaugkanals 52 abgepumpten Recyclingwasser gefahren werden. Dieses Recyclingwasser wird in den Vorwaschkanal der nicht dargestellten Splittaufbereitung gepumpt, und das Abwasser der Splittseite dann in den Einlauf 32 eingeleitet. Dieser Kreislauf beeinflußt die Wasch- und Klassierkreisläufe in der Vorwaschkammer 7, Nachwaschkammer 10 und zwischen den beiden Radkörpern 2, 3 nicht.

Für die Produktion von extrem scharfem Sand ist ein weiterer Wasch- und Klassierkreislauf möglich. Wenn alle Klassierkreisläufe, wie Ausspülen der Sandabsetzkammern 13 bis 17, Feinklassierung mit den Lamellenpaketen, ausgeschöpft sind und im Bereich 0 bis 0,25 mm soll maximal zum Radkörper 3 hin ausgespült werden, so kann Recyclingwasser aus den Sammelrinnen 24 und 53 in den Einlauf 11 gepumpt werden. Dadurch erhöht sich die Strömungsgeschwindigkeit zum Radkörper 3 und es werden mehr Feinteile ausgespült.

Für eine Automatisierung der Wasch- und Klassierprozesse sind folgende Maßnahmen wesentlich:
- die Drehzahl des Schöpfradantriebes wird automatisch durch Frequenzumformer der Feststoffmenge angepaßt;
- die Drehzahl der Recycling-Waschwasserpumpen für die Waschprogramme werden nach Verschmutzungsgrad des Sandes und Feststoffmenge automatisch durch Frequenzumformer drehzahlgeregelt;
- die Klassierprogramme werden durch die kontrollierte Ausspülung der Sandabsetzkammern, z. B. 13 oder 17 usw. realisiert, und die Feinklassierung mittels der Lamellenpakete wird durch eine automatische Drehzahlregelung der Recycling-Waschwasserpumpen verwirklicht;
- die Frequenzen aller Motoren (Schöpfradantrieb, Pumpen) werden über Computer verglichen. Ebenso wird mittels Computer überwacht, welche Sandabsetzkammern ausgespült werden.

Mit der vorliegenden Erfindung können somit computergesteuerte Wasch- und Klassierprogramme realisiert werden, bei denen die Recycling-Waschwassermenge automatisch dem Verschmutzungsgrad des Sandes und der Feststoffmenge angepaßt wird, ohne daß dadurch ein zusätzlicher Feinsandverlust der verwertbaren Feinsande größer als 0,063 mm eintritt und der Streubereich der Siebkurve im Bereich 0 bis 0,5 mm sehr klein ist.

## Patentansprüche

1. Schöpfrad mit einer Wanne (1) zur Aufnahme eines Sand-Wasser-Gemisches, einem ersten und einem zweiten, koaxial und im Abstand voneinander in der Wanne angeordneten Radkörper (2, 3), wobei der erste Radkörper (2) im Bereich einer Stirnseite der Wanne angeordnet und an der gegenüberliegenden Stirnseite eine Überlaufrinne (22) für Abwasser vorgesehen ist, mit einer jeweils zwischen der Überlaufrinne (22) und dem zweiten Radkörper (3) sowie zwischen den beiden Radkörpern (2, 3) angeordneten Förderschnecke (4, 5) zum Zubringen von abgesetztem Sand zum zweiten bzw. ersten Radkörper, mit einem dem ersten Radkörper (2) zugeordneten Einlauf (11) für das Sand-Wasser-Gemisch und mit je einem Auslauf (58) für den von den beiden Radkörpern (2, 3) abgegebenen Sand, gekennzeichnet dadurch, daß
- die zwischen den beiden Radkörpern (2, 3) vorgesehene Förderschnecke (4) einen kleineren Außendurchmesser besitzt als die zum zweiten Radkörper (3) fördernde Förderschnecke (5);
- zwischen dem ersten Radkörper (2) und der benachbarten Stirnwand (6) der Wanne (1) eine Vorwaschkammer (7) ausgebildet ist;
- zwischen den beiden Radkörpern (2, 3) im Bereich des ersten Radkörpers (2) eine sich von Wannenwandung zu Wannenwandung erstreckende, vom Wannenboden (8) aufragende, bis kurz unterhalb der Förderschnecke (4) reichende Trennwand (9) angeordnet ist, wodurch zwischen dieser Trennwand (9) und dem Radkörper (2) eine Nachwaschkammer (10) gebildet ist;
- der dem ersten Radkörper (2) zugeordnete Einlauf (11) mündet zumindest teilweise in die Vorwaschkammer (7);
- die Trennwand (9) gleichzeitig die Stirnwand eines zwischen den beiden Radkörpern (2, 3) ausgebildeten Klassiertanks (12) bildet, der aus mindestens zwei zum zweiten Radkörper (3) hin ausspülbaren und nach oben offenen Sandabsetzkammern (13, 14, 15, 16, 17) besteht;
- zwischen den beiden Radkörpern (2, 3) an der dem Einlauf (11) gegenüberliegenden Wannenwandung ein bekannter Ansaugkanal (19) für Recyclingwasser vorgesehen ist, der in ein außerhalb der Wanne (1) angeordnetes Wassersammelreservoir (21) mündet, aus dem das Recyclingwasser mittels Pumpe oder Schwerkraft einer weiteren Verwendung zuführbar ist;

2. Schöpfrad nach Anspruch 1, dadurch gekennzeichnet, daß an der dem Einlauf (11) gegenüberliegenden Wannenwandung zwischen der Überlaufrinne (22) und dem zweiten Radkörper (3) mindestens ein weiterer, bekannter Ansaugkanal (23) für Recyclingwasser angeordnet ist, aus dessen Wassersammelreservoir (24) Spülrohrleitungen (25) in die Sandabsetzkammern (13, 14, 15, 16, 17) führen.

3. Schöpfrad nach einem der vorstehenden Ansprüche, dadurch gekennzeichnet, daß der dem ersten Radkörper (2) zugeordnete Einlauf (11) zum größeren Teil in die Vorwaschkammer (7) und zum kleineren Teil in die Nachwaschkammer (10) einmündet.

4. Schöpfrad nach einem der vorhergehenden Ansprüche, dadurch gekennzeichnet, daß zumindest ein Wassersammelreservoir (20, 21, 24) durch mindestens ein Lamellenpaket (26, 27) in Kammern (28, 29; 30, 31) unterteilt ist, wobei der Recyclingwasser-Durchfluß von einer (28; 30) zur anderen Kammer (29; 31) nur über das die Kammern (28, 29; 30, 31) trennende Lamellenpaket (26; 27) erfolgen kann und aus jeder Kammer (28, 29, 30, 31) wahlweise Recyclingwasser entnehmbar ist.

5. Schöpfrad nach einem der vorstehenden Ansprüche, dadurch gekennzeichnet, daß auch dem zweiten Radkörper (3) ein Einlauf (32) zugeordnet ist, der zur Überlaufrinne (22) hin neben dem Radkörper (3) in die Wanne (1) einmündet.

6. Schöpfrad nach Anspruch 5, dadurch gekennzeichnet, daß den beiden Einläufen (11, 32) ein höher als diese angeordneter Verteilereinlauf (33) zugeordnet ist, der durch mindestens ein Lamellenpaket (34, 35) in Kammern (36, 37, 38) unterteilt ist, wobei das Sand-Wasser-Gemisch nur über das die Kammern (36, 37, 38) trennende Lamellenpaket (34, 35) von einer Kammer (36) in die andere Kammer (37, 38) gelangen kann, und daß in den Kammern (36, 37, 38) anfallende Sand-Wasser-Gemisch separiert den Einläufen (11, 32) zuführbar ist.

7. Schöpfrad nach einem der vorstehenden Ansprüche, dadurch gekennzeichnet, daß der Zulauf des Sand-Wasser-Gemisches in die Vorwaschkammer (7) aus einer höher liegenden Einlauföffnung (39) und einer tiefer liegenden Einlauföffnung (40) besteht, wobei in die tiefer liegende Einlauföffnung (40) ein Sand-Wasser-Gemisch mit mehr Grobsand und in die höher liegende Einlauföffnung (39) ein Sand-Wasser-Gemisch mit mehr Feinsand einbindet.

8. Schöpfrad nach einem der vorstehenden Ansprüche, dadurch gekennzeichnet, daß in die Vorwaschkammer (7) ein Recyclingwasser-Aufstromrohr (41) einmündet.

9. Schöpfrad nach einem der vorstehenden Ansprüche, dadurch gekennzeichnet, daß die Trennwand (9) der Umfangskontur der För-derschnecke (4) angepaßt in der Mitte am niedrigsten und an den Wannenwandungen am höchsten ausgeführt ist.

10. Schöpfrad nach einem der vorstehenden Ansprüche, dadurch gekennzeichnet, daß die Förderschnecke (4) viergängig und mit einer größeren Schneckenblechbreite (B) als die För-derschnecke (5) ausgebildet ist.

## Claims

1. Scoop wheel having a trough (1) for containing a sand/water mixture, a first and a second wheel body (2, 3) arranged in the trough coaxially and some distance apart, the first wheel body (2) being arranged in the region of one end wall of the trough and an overflow channel (22) for effluent being provided at the opposing end wall, having a feed screw (4, 5) both between the overflow channel (22) and the second wheel body (3) and between the two wheel bodies (2, 3) for feeding settled sand to the second and the first wheel body, respectively, having an inlet (11), for the sand/water mixture, assigned to the first wheel body (2) and having an outlet (58) for the sand discharged from each of the two wheel bodies (2, 3), characterised in that
- the feed screw (4) provided between the two wheel bodies (2, 3) has a smaller external diameter than the feed screw (5) feeding to the second wheel body (3);
- a prewashing chamber (7) is formed between the first wheel body (2) and the adjacent end wall (6) of the trough (1);
- a partition (9) extending from trough wall to trough wall and projecting from the trough base (8) to just below the feed screw (4) is arranged between the two wheel bodies (2, 3) in the region of the first wheel body (2), by means of which an after-washing chamber (10) is formed between said partition (9) and the wheel body (2);
- the inlet (11) assigned to the first wheel body (2) opens at least partially into the prewashing chamber (7);
- the partition (9) at the same time forms the end wall of a classification tank (12) formed between the two wheel bodies (2, 3), which classification tank (12) consists of at least two sand settling chambers (13, 14, 15, 16, 17) which can be flushed out towards the second wheel body (3) and are open at the top;
- a known suction channel (19) for recycle water is provided between the two wheel bodies (2, 3) at the trough wall opposite the inlet (11), which suction channel (19) opens into a water collection reservoir (21) arranged outside the trough (1), from which water collection reservoir (21) the recycle water can be supplied for further use by means of a pump or gravity; (sic)

2. Scoop wheel according to Claim 1, characterised in that at least a further, known suction channel (23) for recycle water is arranged at the trough wall opposite the inlet (11), between the overflow channel (22) and the second wheel body (3), flushing lines (25) leading from the water collection reservoir (24) of said further suction channel (23) into the sand settling chamber (13, 14, 15, 16, 17).

3. Scoop wheel according to one of the preceding claims, characterised in that the larger part of the inlet (11) assigned to the first wheel body (2) opens into the prewashing chamber (7) and the smaller part opens into the after-washing chamber (10).

4. Scoop wheel according to one of the preceding claims, characterised in that at least one water collection reservoir (20, 21, 24) is subdivided by at least one set of lamellae (26, 27) into chambers (28, 29; 30, 31), it being possible for the passage of recycle water from one (28; 30) to the other chamber (29; 31) to take place only via the set of lamellae (26; 27) separating the chambers (28, 29; 30, 31) and it being possible to remove recycle water from each chamber (28, 29, 30, 31) as desired.

5. Scoop wheel according to one of the preceding claims, characterised in that an inlet (32) is also assigned to the second wheel body (3), which inlet (32) opens into the trough (1) towards the overflow channel (22) alongside the wheel body (3).

6. Scoop wheel according to Claim 5, characterised in that a distributor inlet (33) is assigned to the two inlets (11, 32), which distributor inlet is arranged higher than said inlets (11, 32) and is subdivided by at least one set of lamellae (34, 35) into chambers (36, 37, 38), it being possible for the sand/water mixture to pass from one chamber (36) into the other chamber (37, 38) only via the set of lamellae (34, 35) separating the chambers (36, 37, 38), and in that sand/water mixture collecting in the chambers (36, 37, 38) can be fed separated to the inlets (11, 32).

7. Scoop wheel according to one of the preceding claims, characterised in that the feed of the sand/water mixture into the prewashing chamber (7) consists of an inlet opening (39) located at a higher level and an inlet opening (40) located at a lower level, a sand/water mixture containing more coarse sand tying in with the inlet opening (40) at a lower level and a sand/water mixture containing more fine sand tying in with the inlet opening (39) located at a higher level.

8. Scoop wheel according to one of the preceding claims, characterised in that a recycle water outflow pipe (41) opens into the prewashing chamber (7).

9. Scoop wheel according to one of the preceding claims, characterised in that the partition (9) is designed to be lowest in the middle and highest at the trough walls, matching the peripheral shape of the feed screw (4).

10. Scoop wheel according to one of the preceding claims, characterised in that the feed screw (4) is constructed as a four-thread feed screw and with a larger screw plate width (B) than the feed screw (5).

## Revendications

1. Roue à godets comportant un bac réservoir (1) pour recevoir un mélange de sable et d'eau, un premier corps de roue (2) et un second corps de roue (3) qui sont coaxiaux et placés à une certaine distance l'un de l'autre dans le bac réservoir, le premier corps de roue (2) étant placé dans la région d'une paroi d'extrémité du bac réservoir qui est pourvu, sur la paroi d'extrémité opposée, d'une goulotte de trop plein (22) pour l'évacuation d'eau, avec une vis de transport (4, 5) disposée respectivement entre la goulotte de trop plein (22) et le second corps de roue (3) ou bien entre les deux corps de roue (2, 3) pour alimenter en sable déposé le second corps ou bien le premier corps de roue, avec une entrée (11) affecté au premier corps de roue (2) pour le mélange de sable et d'eau et avec respectivement une sortie (58) pour le sable éliminé par les deux corps de roue (2, 3), caractérisée en ce que
la vis de transport (4), prévue entre les deux corps de roue (2, 3), a un diamètre extérieur plus petit que celui de la vis de transport (5) alimentant le second corps de roue (3);
entre le premier corps de roue (2) et la paroi d'extrémité (6) voisine du bac réservoir (1), est prévue une chambre de prélavage (7) ;
entre les deux corps de roue (2, 3), dans la région du premier corps de roue (2), est prévue une paroi séparatrice (9) allant d'une paroi latérale du bac réservoir à l'autre paroi latérale, en saillie sur le fond du bac réservoir (8), arrivant tout près du dessous de la vis de transport (4), de manière que se forme, entre cette paroi de séparation (9) et le corps de roue (2), une chambre de rinçage (10) ;
l'entrée (11) affectée au premier corps de roue (2) débouche au moins partiellement dans la chambre de prélavage (7) ;
la paroi de séparation (9) forme, entre les deux corps de roue (2, 3), simultanément la paroi avant d'un réservoir de sélection (12) qui se compose d'au moins deux chambres de dépôt de sable (13, 14, 15, 16, 17) qui peuvent refouler sur le second corps de roue (3) et qui sont ouvertes vers le haut ;
entre les deux corps de roue (2, 3), sur la paroi de bac réservoir opposée à l'entrée (11), est prévu un canal d'aspiration connu (19) pour l'eau de recyclage, canal qui débouche dans un réservoir de rassemblement d'eau (21) à l'extérieur du bac réservoir (1), et par lequel peut être alimentée l'eau de recyclage au moyen de pompe ou par gravité à partir d'une autre utilisation.

2. Roue à godets suivant la revendication 1, caractérisée en ce que, sur la paroi du bac réservoir, opposée à l'entrée (11), entre la goulotte de trop plein (22) et le second corps de roue (3), est prévu au moins un autre canal d'aspiration connu (23) pour l'eau de recyclage, hors du réservoir de rassemblement d'eau (24) duquel des conduites de rinçage (25) vont dans les chambres de dépôt de sable (13, 14, 15, 16, 17).

3. Roue à godets suivant une des précédentes revendications, caractérisée en ce que l'entrée (11) affectée au premier corps de roue (2) débouche pour une grande partie dans la chambre de prélavage (7) et pour une petite partie dans la chambre de rinçage (10).

4. Roue à godets suivant une des précédentes revendications, caractérisée en ce qu'au moins un réservoir de rassemblement d'eau (20, 21, 24) est divisé par au moins un paquet de lamelles (26, 27) en chambres (28, 29; 30, 31), la circulation d'eau de recyclage d'une chambre (28 ; 30) vers une autre chambre (29 ; 31) ne pouvant se faire que par le paquet de lamelles (26 ; 27) séparant les chambres (28, 29 ; 30, 31) et l'eau de recyclage pouvant être facultativement soutirée hors de chaque chambre (28, 29, 30, 31).

5. Roue à godets suivant une des précédentes revendications, caractérisée en ce qu'il est aussi prévu une entrée (32), affectée au second corps de roue (3), qui débouche dans le bac réservoir (1) près du corps de roue (3) vers la goulotte de trop plein (22).

6. Roue à godets suivant la revendication 5, caractérisée en ce qu'aux deux entrées (11, 32), est affectée une entrée de distribution (33), placée plus haut que celles-ci, qui est subdivisée par au moins un paquet de lamelles (34, 35) dans les chambres (36, 37, 38), le mélange de sable et d'eau ne pouvant passer, à cause du paquet de lamelles (34, 35) séparant les chambres (36, 37, 38), d'une chambre (36) aux autres chambres (37, 38), et en ce que le mélange de sable et d'eau produit dans les chambres (36, 37, 38) peut être envoyé séparément dans les entrées (11, 32).

7. Roue à godets suivant une des précédentes revendications, caractérisée en ce que l'arrivée de mélange de sable et d'eau dans la chambre de prélavage (7) se compose d'une ouverture d'entrée haute (39), et d'une ouverture d'entrée basse (40), dans l'ouverture d'entrée basse (40) s'intégrant un mélange de sable et d'eau contenant plus de sable grossier, et dans l'ouverture d'entrée haute (39) s'intégrant un mélange de sable et d'eau contenant plus de sable fin.

8. Roue à godets suivant une des précédentes revendications, caractérisée en ce que, dans la chambre de prélavage (7), débouche un tube à courant ascendant d'eau de recyclage (41).

9. Roue à godets suivant une des précédentes revendications, caractérisée en ce que la paroi de séparation (9) s'adapte au contour extérieur de la vis de transport (4) dans le milieu au plus bas et remontant vers le haut sur les parois de bac réservoir.

10. Roue à godets suivant une des précédentes revendications, caractérisée en ce que la vis de transport (4) a une forme rectangulaire, avec une largeur de tôle de vis sans fin (B) plus grande que la vis de transport (5).
